# EUROPEAN PATENT APPLICATION

(11) **EP 3 730 692 A1**
(43) Date of publication of application: **28.10.2020**
(21) Application number: 18890241.5
(22) Date of filing: 21.12.2018
(51) Int. Cl.: D07B 1/06, B60C 9/00, D02G 3/48

(54) **ELASTOMER REINFORCEMENT CORD**

(30) Priority: 22.12.2017 JP 2017245796
(71) Applicant: Bridgestone Corporation, Chuo-Ku Tokyo 104-8340 (JP)
(72) Inventor: ANDO Nobuhiro, Tokyo 104-8340 (JP)
(74) Representative: Lang, Johannes
(86) International application number: PCT/JP2018/047386
(87) International publication number: WO 2019/124559

(57) **Abstract**

Provided is an elastomer reinforcement cord which takes advantage of characteristics of a composite cord using steel filaments and a resin filament and in which a diameter (a geometrically calculated value) of the cord including only the steel filaments without resin, as calculated from a wire diameter of the steel filaments used, is substantially the same as an actual cord diameter after vulcanization. In an elastomer reinforcement cord 10 including a core and at least one sheath layer, in which metal filaments 2 and 3 and a resin filament 1 are twisted together, gaps between the metal filaments are filled with resin. The diameter of the cord is from 98 to 100.5% of the geometrically calculated value of the diameter of the cord including only the metal filaments, and a total length of gaps between the metal filaments forming an outermost sheath layer before vulcanization is 85% or less of the geometrically calculated value. In a region surrounded by connecting the center of each metal filament forming the outermost sheath layer on a cross section in a direction orthogonal to an axial direction of the cord, the ratio of a polymer material to a region other than the region occupied by the metal filaments is from 52 to 120%.

## Description

### TECHNICAL FIELD

The present invention relates to an elastomer reinforcement cord (hereinafter also referred to simply as "cord").

### BACKGROUND ART

Conventionally, a steel cord formed by twisting steel filaments together is used as a reinforcement material for a belt of a tire. However, in such a steel cord, for example, when the tire is externally injured and there occurs damage to the belt, moisture or the like in external environment enters gaps between the filaments forming the steel cord, which can create rust on the steel cord. For this reason, a gap is provided in the steel cord to allow rubber to penetrate the steel cord during vulcanization, thereby blocking the passage of water. Under such circumstances, for example, Patent Document 1 proposes a composite cord formed by twisting sheath wires including 2 to 12 steel filaments together around a core including a resin filament having a melting point of from 50°C to less than 200°C. This composite cord achieves rust resistance of the steel filaments by melting the resin filament during vulcanization to allow rubber infiltration between the steel filaments.

### RELATED ART DOCUMENT

### PATENT DOCUMENT

Patent Document 1: JP2001-234444A

### SUMMARY OF THE INVENTION

### PROBLEMS TO BE SOLVED BY THE INVENTION

However, in the conventional composite cord, it has been found that when twisting resin into between the core and the sheath layer, tension at the time of twisting becomes unstable if the resin filament has large surface friction, due to which uneven twisting of the resin filament makes it difficult to secure twist properties.

Additionally, when trying to twist an amount of resin necessary to fill the gaps between the filaments, there is a concern about the occurrence of defective embedment at the time of embedment of cords by calendering since the twist properties of the outermost layer sheath are unstable due to the uneven twisting of the resin filament. In addition, an increase in cord diameter thickens calendering gauge, leading to a cost increase due to an increased amount of rubber to be used.

Accordingly, it is an object of the present invention to provide an elastomer reinforcement cord which takes advantage of the characteristics of a composite cord using metal filaments and a resin filament and in which a cord diameter (a geometrically calculated value) including only the metal filaments without resin, as calculated from a wire diameter of the metal filaments used, is substantially the same as an actual cord diameter after vulcanization.

### MEANS FOR SOLVING THE PROBLEMS

As a result of intensive and extensive studies for solving the above problems, the inventor of the present invention has found out that the above problems can be solved by a composite cord having a core-sheath structure with metal filaments and a resin filament twisted together, in which gaps between the metal filaments are filled with resin, and the diameter of the cord is set within a predetermined range of a geometrically calculated value of a diameter of the cord including only the metal filaments, and thereby has completed the present invention.

Specifically, an elastomer reinforcement cord of the present invention is an elastomer reinforcement cord including a core and at least one sheath layer, in which metal filaments and a resin filament are twisted together, the elastomer reinforcement cord being characterized in that:
gaps between the metal filaments are filled with resin, and a diameter of the cord is from 98 to 100.5% of a geometrically calculated value of a diameter of the cord including only the metal filaments;
a total length of gaps between the metal filaments that form an outermost sheath layer, before vulcanization, is 85% or less of the geometrically calculated value; and
when, in a region surrounded by connecting a center of each metal filament forming the outermost sheath layer on a cross section in a direction orthogonal to an axial direction of the cord, a region other than the region occupied by the metal filaments is defined as a gap region, a ratio of a polymer material to the gap region is from 52 to 120%.

In the elastomer reinforcement cord of the present invention, the following embodiments are preferable.

A melting point or softening point of the resin is from 80 to 160°C. Additionally, a wire diameter of the metal filaments is from 0.10 to 0.70 mm. In addition, a melt flow rate, as defined by JIS K 7120, of a resin material of the resin filament is 1.0 g/min or more. Furthermore, the cord is formed by twisting the core including the resin filament and three metal filaments together. Still furthermore, the core that is formed by twisting the metal filaments together has a closed structure. Still yet furthermore, the resin filament is completely filled in a gap formed in the core that is formed by twisting three metal filaments together. Moreover, when, in a region surrounded by connecting a center of each metal filament forming the outermost sheath layer on a cross section in a direction orthogonal to an axial direction of the cord, a region other than the region occupied by the metal filaments is defined as a gap region, a ratio of the resin material to the gap region is from 52 to 80%.

### EFFECTS OF THE INVENTION

According to the present invention, there can be provided an elastomer reinforcement cord which takes advantage of the characteristics of a composite cord using metal filaments and a resin filament and in which a diameter (a geometrically calculated value) of the cord including only the metal filaments without resin, as calculated from a wire diameter of the metal filaments used, is substantially the same as an actual cord diameter after vulcanization.

### BRIEF DESCRIPTION OF THE DRAWINGS

FIG. 1 is an illustrative diagram of a cross section in a direction orthogonal to an axial direction of an elastomer reinforcement cord according to one suitable embodiment of the present invention.
FIG. 2 is a cross-sectional diagram in a direction orthogonal to an axial direction of an elastomer reinforcement cord of Comparative Example 1.
FIG. 3 is a cross-sectional diagram in a direction orthogonal to an axial direction of an elastomer reinforcement cord of Comparative Example 2.
FIG. 4 is a cross-sectional diagram in a direction orthogonal to an axial direction of an elastomer reinforcement cord of Comparative Examples 3 and 4.
FIG. 5 is a cross-sectional diagram in a direction orthogonal to an axial direction of an elastomer reinforcement cord of Examples 1 to 3.
FIG. 6 is a cross-sectional diagram in a direction orthogonal to an axial direction after vulcanization of the elastomer reinforcement cord in each Example.

### MODE FOR CARRYING OUT THE INVENTION

Hereinafter, an elastomer reinforcement cord of the present invention will be described in detail by using the drawings.

The cord of the present invention includes a core and at least one sheath layer, in which metal filaments and a resin filament are twisted together.

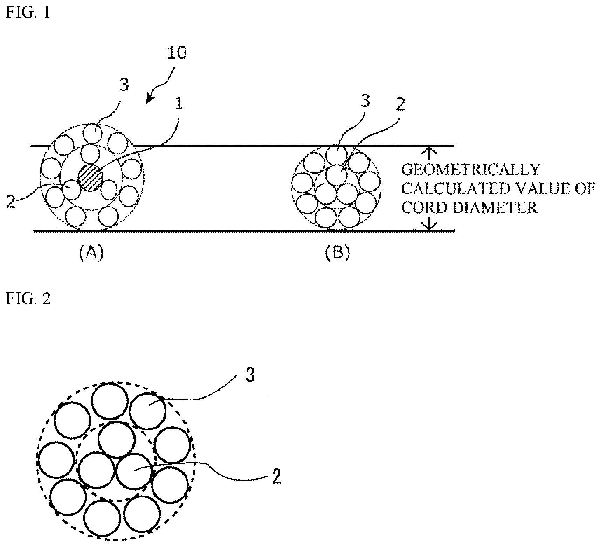

In a cord 10 illustrated as (A) in FIG. 1, three metal filaments 2 are first twisted together around one resin filament 1, and furthermore, nine metal filaments 3 are twisted therearound.

In the present invention, gaps between the metal filaments of such a cord are filled with a resin, and the diameter of the cord is from 98 to 100.5% of a geometrically calculated value of a diameter of the cord illustrated as (B) in FIG. 1 including only the metal filaments. If the geometrically calculated value is less than 98%, the cross-sectional shape of the cord begins to collapse, which can cause abnormalities such as deterioration of twist properties, so that there is a concern about reduction in the treatment performance of rubber and the cord. On the other hand, if it exceeds100.5%, a distance between the metal filaments 3 forming the outermost sheath layer becomes too large, thereby reducing cord strength. In the first place, favorable cord packing cannot be achieved, and the twist properties are deteriorated, causing a concern about defective cord embedment or the like.

Additionally, in the present invention, a total length of gaps w between the metal filaments 3 forming an outermost sheath layer before vulcanization is preferably 85% or less of the geometrically calculated value. If the total length of the gaps becomes more than 85% of the geometrically calculated value, the filaments cannot be sufficiently packed, which makes it difficult to satisfactorily maintain the twist properties. Additionally, herein, the geometrically calculated value of the total length of the gaps between the metal filaments is a total length of the gaps between the metal filaments forming the outermost sheath layer in the cord including only the metal filaments without resin, as calculated from a wire diameter of the metal filaments used.

In addition, the temperature of a melting point or a softening point of the resin forming the resin filament 1 is preferably from 80 to 160°C. At such a temperature, the resin can be favorably filled in the gaps between the metal filaments.

Additionally, from the viewpoint of maintaining strength, the wire diameter of the metal filaments is preferably from 0.10 to 0.70 mm, more preferably from 0.12 to 0.60 mm, and still more preferably from 0.15 to 0.50 mm. Furthermore, a melt flow rate, as defined by JIS K 7120, of the resin material of the resin filament is preferably 1.0 g/min or more. When the resin filament is arranged at the center, fluidity at this level of melt flow rate is appropriate. Still furthermore, as illustrated, it is preferable to include the core including one resin filament 1 and a sheath formed by twisting three metal filaments 2 together. Still yet furthermore, preferably, the core that is formed by twisting the metal filaments 2 together has a closed structure, and the resin of the resin filament 1 is completely filled in a gap formed in the core that is formed by twisting two or more metal filaments 2 together, in which it is more preferable to include a sheath that is formed by twisting three metal filaments together. As illustrated, when the cord is formed by twisting the core including the one resin filament 1 and the three metal filaments 2 together, the resin filament 1 is arranged at the center, so that there is no void at the center of the 1 × 3 structure, whereby rust resistance increases. Moreover, when, in a region surrounded by connecting the center of each metal filament 3 forming the outermost sheath layer on a cross section in a direction orthogonal to an axial direction of the cord, a region other than the region occupied by the metal filaments is defined as a gap region, a ratio of the resin to the gap region is from 52 to 120%, and preferably from 52 to 80%. If the ratio of the resin to the gap region is less than 52%, the gap inside the cord 10 cannot be sufficiently filled, and thus the occurrence of rust on the metal filaments cannot be effectively prevented. On the other hand, if the ratio of the resin to the gap region exceeds 120%, the amount of resin flowing outside from the outermost sheath layer increases, which can hinder adhesion between elastomer and the cord 10.

In addition, particularly, in the case of a cord having a structure in which the core is formed by twisting three metal filaments together, a resin filament is preferably arranged inside the core, and the resin filament in this case has a wire diameter of preferably from 115 to 170% of a diameter of the metal filaments forming the core. If the wire diameter is smaller than 115%, rust resistance cannot be sufficiently satisfied, whereas if it is larger than 170%, the resin protrudes to the outer layer, which can affect adhesion.

In the cord 10 of the present invention, as the resin material forming the resin filament 1, for example, acid-modified resin can be used. Among acid-modified resins, preferred are resins modified with acid anhydrides such as dimer acid, maleic acid, and itaconic acid. Maleic acid-modified resin can improve adhesion to the metal filaments.

As the maleic acid-modified resins, for example, there may be mentioned maleic anhydride-modified styrene-ethylene-butadiene-styrene block copolymer (SEBS), maleic acid-modified polyethylene, maleic anhydride-modified ultralow density polyethylene, maleic anhydride-modified ethylene-butene-1 copolymer, maleic anhydride-modified ethylene-propylene copolymer, maleic anhydride-modified ethylene-octene, maleic anhydride-modified propylene, and the like. Particularly suitable is maleic acid-modified polyethylene.

Additionally, in the cord 10 of the present invention, the resin filament 1 may include an ionomer. The ionomer smoothens a surface of the resin filament 1, whereby spinnability can be improved, and also, sliding of the resin filament 1 in a twisting machine can be facilitated.

As the ionomer, there may be specifically mentioned zinc-ion neutralized ionomers, such as HIMILAN 1554, HIMILAN 1557, HIMILAN 1650, HIMILAN 1652, HIMILAN 1702, HIMILAN 1706, and HIMILAN 1855 and sodium-ion neutralized ionomers, such as HIMILAN 1555, HIMILAN 1601, HIMILAN 1605, HIMILAN 1707, HIMILAN 1856, and AM 7331, manufactured by Mitsui-DuPont Polychemicals Co., Ltd. Additionally, there may be mentioned lithium-ion neutralized ionomers, such as SURLYN 7930, and sodium-ion neutralized ionomers, such as SURLYN 8120, manufactured by DuPont Co., Ltd. These may also be used singly or in combination of two or more kinds thereof.

As commercially available products of the resin material of the resin filament 1 relating to the cord 10 of the present invention, there may be specifically mentioned TUFTEC manufactured by Asahi Kasei Corporation, for example, M1943, M1911, and M1913. Besides, there may be mentioned ADMER, for example, LB548, NF518, QF551, QF500, and QE060, HI-WAX, for example, 4051E, 4252E, and 1105A, and TAFMER, for example, MH7010 and MH7020, manufactured by Mitsui Chemicals, Inc., "NUCREL" series and "ELVALOY" series manufactured by Mitsui-DuPont Polychemicals Co., Ltd., "MODIC" series manufactured by Mitsubishi Chemical Corporation, "OREVAC" series, "BONDINE" series, and "LOTRYL" series manufactured by Arkema Inc., "REXPEARL" series manufactured by Japan Polyethylene Corporation, "ACRYFT" series manufactured by Sumitomo Chemical Co., Ltd., fluorinated ionomers manufactured by Asahi Kasei Corporation, ethylene/ethyl acrylate copolymers manufactured by NUC Corporation, and the like. These may be used singly or in combination of two or more kinds thereof.

In the cord 10 of the present invention, the resin filament 1 may include an inorganic filler. As described above, the resin filament 1 needs to be easily melted at a vulcanization temperature. However, since there is a relation in which when the melting point of the resin is low, the strength of the resin filament 1 is reduced, the resin filament 1 is broken at the time of twisting, which may worsen productivity. Thus, in the cord 10 of the present invention, an inorganic filler may be added to the resin filament 1 to improve the strength of the resin filament 1. Adding an inorganic filler to the resin filament 1 reduces surface tack of the resin filament 1, so that slidability of the resin filament 1 further improves, which facilitates twisting into a steel cord.

As such an inorganic filler, for example, there may be mentioned carbon black, silica, aluminum hydroxide, clay, alumina, talc, mica, kaolin, glass balloons, glass beads, calcium carbonate, magnesium carbonate, magnesium hydroxide, calcium carbonate, magnesium oxide, titanium oxide, potassium titanate, barium sulfate, and the like. These may be used singly or in combination of two or more kinds thereof. Among them, from the viewpoint of reinforcement of the resin filament 1, carbon black is preferable. In addition, usually, a rubber composition forming a tire also contains carbon black, and therefore, compatibility between the resin filament 1 relating to the cord 10 of the present invention and the rubber composition forming the tire improves, so that improvement in adhesion between the rubber and the resin can also be expected.

When using carbon black, the grade of the carbon black is not particularly limited, and any one can be selected as appropriate and used. For example, SRF, GPF, FEF, HAF, ISAF, SAF, or the like is used, and there may be suitably mentioned FEF, HAF, ISAF, SAF, and the like, which are particularly excellent in bending resistance and fracture resistance, and whose nitrogen adsorption specific surface area N₂SA (conforming to JIS K 6217-2: 2001) is preferably from 30 to 150 m²/g, and more preferably from 35 to 130 m²/g.

Additionally, the resin filament 1 relating to the cord 10 of the present invention may include a thermoplastic resin or a thermoplastic elastomer to such an extent that does not impair the above effects. Furthermore, various kinds of additives such as anti-aging agent, an oil, a plasticizer, a color former, and a weathering agent may be included (blended).

The resin filament 1 relating to the cord 10 of the present invention can be manufactured by a known method, and the manufacturing method therefor is not particularly limited. For example, the resin filament 1 can be manufactured by drawing a resin composition obtained by kneading the above resin and the above inorganic filler. Alternatively, a master batch may be manufactured in advance by adding a large amount of the inorganic filler to the resin and added to the resin to obtain a resin composition containing a predetermined amount of the inorganic filler, and the resin composition can be drawn for manufacturing the resin filament 1.

In the cord 10 of the present invention, the wire diameter, tensile strength, and cross-sectional shape of the metal filaments are not particularly limited. In general, a metal filament refers to a linear metal whose main component is steel, i.e., iron (the mass of the iron to the total mass of the metal filament exceeds 50% by mass), and may be made of only iron or may include a metal other than iron, such as, for example, zinc, copper, aluminum, or tin.

Additionally, in the cord 10 of the present invention, the surfaces of the metal filaments may be plated. The kind of the plating is not particularly limited, and there may be mentioned, for example, besides zinc (Zn) plating, copper (Cu) plating, tin (Sn) plating, brass (copper-zinc (Cu-Zn)) plating, and bronze (copper-tin (Cu-Sn)) plating, three-element plating, such as copper-zinc-tin (Cu-Zn-Sn) plating and copper-zinc-cobalt (Cu-Zn-Co) plating, and the like. Among them, brass plating and copper-zinc-cobalt plating are preferable. This is because a metal filament including brass plating has excellent adhesion to rubber. Additionally, in brass plating, usually, a ratio between copper and zinc (copper: zinc) is 60 to 70:30 to 40 on a mass basis, and copper-zinc-cobalt plating usually contains 60 to 75% by weight of copper and 0.5 to 10% by weight of cobalt. In addition, the layer thickness of a plated layer is generally from 100 nm to 300 nm.

The structure of the cord 10 of the present invention is not particularly limited as long as it is the structure including a core and at least one sheath layer, and preferred are layer-twisted structures, like a cord having an n + m structure such as 1 + 6, 2 + 6, 2 + 8, 3 + 8, or 3 + 9, a cord having an n + m + 1 structure such as 3 + 9 + 15 or 1 + 6 + 11, and a cord having a so-called compact structure such as 1 + 6, 2 + 8, 3 + 9, or 1 + 6 + 12, respectively, after vulcanization, and structures like steel cords having multi-twisted structures by further twisting them. Particularly, in the cord having the structure in which the core is formed by twisting the three metal filaments together, it is difficult to allow elastomer to infiltrate into a void inside the core. However, as illustrated in FIG. 1, when the resin filament 1 is arranged inside the core, the void at the center of the core can be filled with the resin material after vulcanization, so that it is suitable as the structure of the cord 10 of the present invention.

In the cord 10 of the present invention, the arrangement position of the resin filament 1 is not particularly limited and can be set as appropriate such that the ratio of the resin material to the gap region after vulcanization is from 40 to 120%. For example, to favorably obtain the effects of the present invention, in the case of a layer-twisted steel cord, the arrangement position is preferably on an inner side than outermost layer sheath filaments, and in the case of a multi-twisted steel cord, it is preferably on an inner side than outermost layer sheath strands or on an inner side than outermost layer sheath filaments of each strand.

The cord 10 of the present invention can generally be manufactured by simultaneously twisting the resin filament together at the time of twisting into a steel cord by using a twisting machine for manufacturing steel cords for tires. Therefore, no working step is increased, and productivity is not reduced. In addition, to prevent twisting breakage of the different kinds of materials, the steel filaments and the resin filament, it is preferable to use a resin material having as high a strength as possible. Preferably, Rockwell hardness (_H scale) is from 30 to 150. Additionally, if the Rockwell hardness exceeds 150, it is difficult to perform deformation processing of the resin filament and the twist properties of the cord are deteriorated. The strength of the resin filament can be increased by increasing a draw ratio when manufacturing the resin filament. In addition, it is preferable that sliding of the resin filament in the twisting machine is smooth.

The cord 10 of the present invention has excellent adhesion to elastomer such as rubber, and therefore can be suitably used at portions where steel cord-rubber composites have been conventionally used. Particularly, the cord 10 can be suitably used in rubber products such as tires, belts, and hoses. For example, when used in tires, there may be mentioned passenger vehicle tires and truck and bus tires. Additionally, portions of application thereof are also not particularly limited, and it can be used as a reinforcement material for a carcass ply and a reinforcement for a belt. In this case, the cord 10 may be used only for local reinforcement of a part of treads. For example, it can also be used only for local reinforcement of a vicinity of tread ends, a vicinity of an equatorial plane, a vicinity of groove bottoms, or an end of another inclined belt layer or a circumferential cord layer when the layer is included.

In addition, the elastomer for coating the cord 10 of the present invention is also not particularly limited, and rubber or the like that has been conventionally used to coat metal cords can be used. Other than this, there can be preferably used, for example, diene-based rubbers and hydrogenated products thereof, such as natural rubber (NR), isoprene rubber (IR), epoxidized natural rubber, styrene butadiene rubber (SBR), butadiene rubber (BR, high-cis BR and low-cis BR), nitrile rubber (NBR), hydrogenated NBR, and hydrogenated SBR, olefin rubbers such as ethylene propylene rubber (EPDM, EPM), maleic acid-modified ethylene propylene rubber (M-EPM), butyl rubber (IIR), isobutylene and aromatic vinyl or diene-based monomer copolymer, acryl rubber (ACM), and ionomer, halogen-containing rubbers such as Br-IIR, CI-IIR, brominated isobutylene paramethyl styrene copolymer (Br-IPMS), chloroprene rubber (CR), hydrin rubber (CHR), chlorosulfonated polyethylene rubber (CSM), chlorinated polyethylene rubber (CM), and maleic acid-modified chlorinated polyethylene rubber (M-CM), silicone rubbers such as methyl vinyl silicone rubber, dimethyl silicone rubber, and methyl phenyl vinyl silicone rubber, sulfur-containing rubbers such as polysulfide rubber, fluoro rubbers such as vinylidene fluoride rubber, fluorine-containing vinyl ether-based rubber, tetrafluoroethylene-propylene-based rubber, fluorine-containing silicone-based rubber, and fluorine-containing phosphazene-based rubber, and thermoplastic elastomers such as styrene-based elastomer, olefin-based elastomer, ester-based elastomer, urethane-based elastomer, and polyamide-based elastomer. These elastomers may be used singly or in combination of two or more kinds thereof.

### EXAMPLES

Hereinafter, the present invention will be described in more detail by using Examples.

### <Examples 1 to 3 and Comparative Examples 1 to 4>

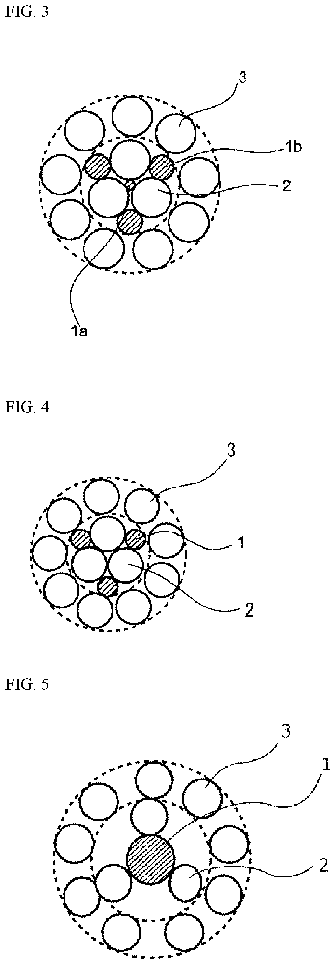

Cords having structures illustrated in FIG. 2 to FIG. 5 were produced using steel filaments having wire diameters of 0.25 mm and 0.34 mm and thermoplastic resin filaments having wire diameters of 0.43 mm and 0.325 mm by a tubular twisting machine. Each obtained cord was coated with a coating rubber to produce a cord-rubber composite body. As the resin filaments, HIMILAN 1702 (manufactured by Mitsui-DuPont Polychemicals Co., Ltd.) was used.

The obtained cord-rubber composite body was vulcanized at 145°C for 40 minutes, and evaluation was made for the cord diameter, twist properties, and rust resistance of a rubber-coated steel cord cut out from the cord-rubber composite body after the vulcanization. Table 1 shows the obtained results together.

Note that the evaluation of rust resistance was made as below, in which shown indexes are those obtained by assuming Comparative Example 2 as 100. It can be said that the larger the values, the higher the rust resistance.

### <Evaluation of Rust Resistance>

The obtained cord-rubber composite body was vulcanized at 145°C for 40 minutes, and both ends of the vulcanized cord-rubber composite body were cut down to have a sample length of 100 mm. One cord end was covered with resin, whereas the other cord end was immersed in 5% aqueous sodium hydroxide solution for 72 hours, and then was taken out from the solution to evaluate a rubber peeling length (a progress length of brass plating dissolution) from the cord end. This was performed for N = 10 to 30 pieces, and variations and levels of absolute values thereof were compared and evaluated using a range of minimum to maximum of the peeling lengths and a central value: median. Table 1 shows indexes obtained by assuming the length of Comparative Example 2 as 100.

**[Table 1]**

| | Comparative Example 1 | Comparative Example 2 | Comparative Example 3 | Example 1 | Comparative Example 4 | Example 2 | Example 3 |
|---|---|---|---|---|---|---|---|
| Structure | FIG. 2 | FIG. 3 | FIG. 4 | FIG. 5 | FIG. 4 | FIG. 5 | FIG. 5 |
| Steel wire diameter (mm) | 0.34 | 0.34 | 0.34 | 0.34 | 0.34 | 0.25 | 0.28 |
| Resin diameter (mm) | - | 1a:0.15 | 0.25 | 0.43 | 0.35 | 0.325 | 0.35 |
| | | 1b:0.325 | | | | | |
| Resin (+ rubber) filling rate (%) | 0 | 93 | 89 | 90 | 92 | 85 | 88 |
| Cord diameter before vulcanization (mm) | 1.41 | 1.52 | 1.44 | 1.41 | 1.50 | 1.04 | 1.11 |
| Cord diameter after vulcanization (mm) | 1.4 | 1.45 | 1.42 | 1.4 | 1.48 | 1.03 | 1.10 |
| Ratio to geometrical cord diameter | 99.3% | 102.8% | 100.7% | 99.3% | 105.0% | 99.1% | 98.8% |
| Total gap length in cord to geometrical total gap length (%) | 80 | 102 | 89 | 80 | 94 | 80 | 81 |
| Core closing | Closed | Incompletely closed | Incompletely closed | Closed | Closed | Closed | Closed |
| Twist properties | Favorable | Poor* | Poor* | Favorable | Poor* | Favorable | Favorable |
| Rust resistance index | 0 | 100 | 97 | 98 | 100 | 97 | 98 |

| | | | | | | | |
|---|---|---|---|---|---|---|---|
| *: Uneven twisting of resin in longitudinal direction | | | | | | | |

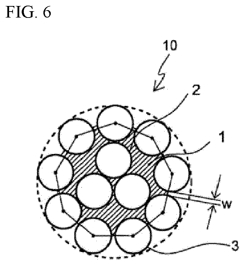

FIG. 6 is a cross-sectional diagram in a direction orthogonal to an axial direction of the elastomer reinforcement cord after vulcanization in each Example. In the cord 10 of the present invention, after vulcanization, the distance w between the metal filaments 3 forming the outermost sheath layer is 100 µm or less. This configuration can reduce an area of the polymer material derived from the resin filament 1 that contacts with elastomer such as rubber after vulcanization. As a result, reduction in the adhesion strength between the cord 10 and the elastomer can be prevented, so that product durability is not impaired. Suitably, the distance w between the metal filaments 3 forming the outermost sheath layer is 20 µm or less.

### DESCRIPTION OF SYMBOLS

1, 1a, 1b: Resin filament
2: Metal filament
3: Metal filament
10: Elastomer reinforcement cord (cord)

## Claims

1. An elastomer reinforcement cord including a core and at least one sheath layer, in which metal filaments and a resin filament are twisted together, the elastomer reinforcement cord being **characterized in that**:
gaps between the metal filaments are filled with resin, and a diameter of the cord is from 98 to 100.5% of a geometrically calculated value of a diameter of the cord comprising only the metal filaments;
a total length of gaps between the metal filaments that form an outermost sheath layer, before vulcanization, is 85% or less of the geometrically calculated value; and
when, in a region surrounded by connecting a center of each metal filament forming the outermost sheath layer on a cross section in a direction orthogonal to an axial direction of the cord, a region other than the region occupied by the metal filaments is defined as a gap region, a ratio of a polymer material to the gap region is from 52 to 120%.

2. The elastomer reinforcement cord according to claim 1, wherein a melting point or a softening point of the resin is from 80 to 160°C.

3. The elastomer reinforcement cord according to claim 1 or 2, wherein a wire diameter of the metal filaments is from 0.10 to 0.70 mm.

4. The elastomer reinforcement cord according to any one of claims 1 to 3, wherein a melt flow rate, as defined by JIS K 7120, of a resin material of the resin filament is 1.0 g/min or more.

5. The elastomer reinforcement cord according to any one of claims 1 to 4, wherein the cord is formed by twisting the core comprising the resin filament and three metal filaments together.

6. The elastomer reinforcement cord according to any one of claims 1 to 5, wherein the core that is formed by twisting the metal filaments together has a closed structure.

7. The elastomer reinforcement cord according to any one of claims 1 to 6, wherein the resin filament is completely filled in a gap formed in the core that is formed by twisting three metal filaments together.

8. The elastomer reinforcement cord according to any one of claims 1 to 7, wherein when, in a region surrounded by connecting a center of each metal filament forming the outermost sheath layer on a cross section in a direction orthogonal to an axial direction of the cord, a region other than the region occupied by the metal filaments is defined as a gap region, a ratio of the polymer material to the gap region is from 52 to 80%.
